## Europäisches Patentamt
## European Patent Office
## Office européen des brevets

(11) Numéro de publication : **0 287 440 B1**

(12)

# FASCICULE DE BREVET EUROPEEN

(45) Date de publication du fascicule du brevet :
**17.07.91 Bulletin 91/29**

(21) Numéro de dépôt : **88400848.3**

(22) Date de dépôt : **08.04.88**

(51) Int. Cl.⁵ : **F16C 39/06**

(54) Palier magnétique actif avec atterrisseur de secours.

(30) Priorité : **09.04.87 FR 8705042**

(43) Date de publication de la demande :
**19.10.88 Bulletin 88/42**

(45) Mention de la délivrance du brevet :
**17.07.91 Bulletin 91/29**

(84) Etats contractants désignés :
**BE DE ES GB IT NL SE**

(56) Documents cités :
**DE-A- 2 223 218**
**DE-A- 3 217 341**
**FR-A- 2 428 142**
**US-A- 4 180 946**
**COMPRESSED AIR MAGAZINE, vol. 90, no. 4,
avril 1985, pages 30-33, Washington, US:
"Suspending rotating shafts in midair"**

(56) Documents cités :
**PATENT ABSTRACTS OF JAPAN, vol. 8, no.
182 (M-319)[1619], 22 août 1984, page 29 M
319; & JP-A-59 73 624 (AISHIN SEIKI K.K.)
25-04-1984**
**PATENT ABSTRACTS OF JAPAN, vol. 6, no.
253 (M-178)[1131], 11 décembre 1982, page
162 M 178; & JP-A-57 149 621 (TOKYO SHI-
BAURA DENKI K.K.) 16-09-1982**

(73) Titulaire : **SOCIETE EUROPEENNE DE
PROPULSION
24 rue Simon de Rothschild
F-92150 Suresnes (FR)**

(72) Inventeur : **Girault, Jean-Philippe, N.
17, rue de Glatigny Forêt de la Folie
F-27510 Tourny (FR)**

(74) Mandataire : **Thévenet, Jean-Bruno et al
Cabinet BEAU DE LOMENIE 55 rue
d'Amsterdam
F-75008 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un palier magnétique radial avec atterrisseur de secours et l'application d'un tel palier à une turbomachine à suspension magnétique active.

L'invention a plus particulièrement pour objet un palier magnétique radial avec atterrisseur de secours comprenant une armature ferromagnétique feuilletée statorique solidaire d'un bâti, des enroulements d'électro-aimant montés dans des encoches de l'armature statorique, et une armature ferromagnétique feuilletée rotorique solidaire d'un arbre tournant et définissant un entrefer avec l'armature statorique qui lui fait face.

On connaît déjà, notamment par le document de brevet US-A-4 180 946, des machines tournantes équipées d'une suspension magnétique active. La suspension d'un arbre tournant de machine à l'aide de paliers magnétiques actifs présente de nombreux avantages. Toutefois, il est nécessaire d'adjoindre aux paliers magnétiques des roulements de secours, généralement du type roulements à billes, destinés à supporter le rotor à l'arrêt, ou en cours de fonctionnement en cas de défaillance de l'alimentation des paliers magnétiques actifs. Ces roulements à billes, qui présentent un contact métal-métal, sont soumis à une usure rapide lorsqu'ils sont en service et ne permettent pas au rotor d'effectuer un atterrissage en douceur en cas de défaillance des paliers magnétiques. De plus, ils contribuent à augmenter l'encombrement de la suspension.

On a également proposé de supporter une turbomachine, à la fois à l'aide d'un palier magnétique central actif radial et de paliers radiaux d'extrémité à fluide, afin de combiner les avantages des paliers fluides et des paliers magnétiques.Un tel type de suspension reste cependant complexe et encombrant et ne permet pas de bénéficier de tous les avantages des suspensions magnétiques actives complètes à cinq axes asservis du type comprenant au moins une butée magnétique axiale et deux paliers magnétiques radiaux avec leurs détecteurs associés.

La présente invention vise à remédier aux inconvénients précités et à réaliser un palier magnétique radial avec atterrisseur de secours qui présente une grande sécurité de fonctionnement et une usure limitée, notamment en cas de défaillance ou d'arrêt de l'alimentation du palier magnétique.

Ces buts sont atteints grâce à un palier magnétique radial du type défini en tête de la description, caractérisé en ce qu'il comprend un dispositif atterrisseur de secours constitué par au moins une première bague ancrée dans l'armature rotorique et une seconde bague ancrée dans l'armature statorique, en ce que les première et seconde bagues sont concentriques et ménagent entre elles un espace libre dont la longueur dans le sens radial est de l'ordre de la moitié de la longueur de l'entrefer moyen du palier magnétique, et en ce que les première et seconde bagues sont réalisées en un matériau composite ou en une résine fluorée thermoplastique.

La présente invention vise également à réaliser une turbo-machine, notamment une turbopompe, qui puisse bénéficier de l'ensemble des avantages des suspensions magnétiques actives à cinq axes asservis tout en présentant une grande sécurité de fonctionnement et une usure limitée, notamment en cas de défaillance ou d'arrêt de l'alimentation des paliers magnétiques.

Ces buts sont atteints grâce à une turbomachine à suspension magnétique active comprenant un carter fixe, un arbre tournant solidaire d'au moins une roue de turbine, un palier magnétique actif axial pour le positionnement axial de l'arbre tournant à l'intérieur du carter, un détecteur axial de la position axiale de l'arbre tournant, deux paliers magnétiques actifs radiaux pour le positionnement radial de l'arbre tournant à l'intérieur du carter, au moins deux détecteurs radiaux de la position radiale de l'arbre tournant et un système de commande recevant les signaux délivrés par l'ensemble des détecteurs pour contrôler par l'intermédiaire des paliers magnétiques actifs radiaux et axial les jeux radiaux et axiaux entre les organes de machine solidaires du carter et les organes de machine solidaires de l'arbre tournant, **caractérisée** en ce qu'elle comprend en outre au moins deux dispositifs atterrisseurs de secours constitués chacun par une première bague solidaire de l'arbre tournant et une seconde bague solidaire du carter et concentrique à la première bague en ménageant avec la première bague un espace libre dont la longueur dans le sens radial est de l'ordre de la moitié de la longueur de l'entrefer moyen des paliers magnétiques radiaux et en ce que les première et seconde bagues sont réalisées en un matériau composite ou en une résine fluorée thermoplastique.

Avantageusement, la première bague et la seconde bague d'un dispositif atterrisseur de secours sont ancrées respectivement dans l'armature ferromagnétique feuilletée rotorique et dans l'armature ferromagnétique feuilletée statorique d'un palier magnétique actif radial.

Les première et seconde bagues d'un dispositif atterrisseur de secours peuvent être réalisées en un matériau composite du type carbone-carbone ou carbone-carbure de silicium ou encore carbure de silicium-carbure de silicium.

L'utilisation d'atterrisseurs en matériau composite incorporés aux paliers magnétiques radiaux accroît la compacité de la machine, puisqu'elle évite l'adjonction de roulements de secours, et assure en outre un atterrissage en douceur qui ne provoque à chaque fois qu'une usure limitée des atterrisseurs.

Selon un premier mode de réalisation, chacune des première et seconde bagues d'un dispositif atterrisseur de secours présente la forme d'un anneau ininterrompu dans le sens circonférentiel.

Toutefois, selon un second mode de réalisation, chacune des première et seconde bagues d'un dispositif atterrisseur de secours est constituée par un ensemble de segments de bague espacés les uns des autres.

Ce dernier mode de réalisation est particulièrement intéressant, car il permet, notamment dans le cas de turbomachines de type turbo-pompe, la mise en oeuvre de paliers mixtes cumulant des forces magnétiques et hydrodynamiques, lesquels paliers assurent, tout en restant compacts, une redondance de la suspension magnétique. Ceci augmente la sécurité de fonctionnement, et permet en outre d'obtenir un amortissement à large bande.

Ainsi, selon une caractéristique avantageuse de la présente invention, la turbomachine de type turbo-pompe comprend en outre des canaux aménagés dans les armatures ferromagnétiques statoriques des paliers magnétiques actifs radiaux pour amener dans les entrefers de ces paliers du fluide pressurisé par la pompe, et les entrefers des paliers magnétiques radiaux sont délimités par des surfaces de géométries légèrement différentes l'une de l'autre afin de créer des effets hydrodynamiques significatifs au niveau de chacun des paliers magnétiques actifs radiaux.

Selon une autre caractéristique de la présente invention, les roues de turbine sont réalisées en matériau composite, tel qu'un matériau à fibres de carbone-carbure de silicium ou fibres de carbure de silicium-carbure de silicium.

Les roues de pompe peuvent elles-mêmes être réalisées en matériau composite, tel qu'un matériau à fibres de carbone-résine.

Ceci contribue à diminuer la masse de l'ensemble tournant et, en combinaison avec les moyens de suspension selon l'invention, permet entre autres de placer sans risque les roues de turbine en porte-à-faux.

D'autres caractéristiques et avantages de l'invention ressortiront de la description de modes particuliers de réalisation, donnés a titre d'exemples, en référence aux dessins annexés sur lesquels :

– la figure 1 est une vue de côté avec demi-coupe axiale d'une turbopompe à double entrée à laquelle est applicable la présente invention,

– la figure 2 est une vue analogue à celle de la figure 1, mais concerne une turbo-pompe à simple entrée,

– la figure 3 est une vue analogue à celle de la figure 2, mais concerne une turbo-pompe à simple entrée dans laquelle l'un des paliers radiaux est localisé au niveau du flasque de la pompe,

– la figure 4 est une vue en demi-coupe, dans un plan radial d'un palier magnétique radial selon un premier mode de réalisation de l'invention,

– la figure 5 est une vue en demi-coupe, dans un plan radial, d'un palier magnétique radial selon un second mode de réalisation de l'invention,

– les figures 6 à 10 sont des vues en coupe dans un plan radial montrant différentes géométries possibles pour l'entrefer d'un palier radial mixte à effets magnétique et hydrodynamique selon l'invention,

– la figure 11 représente le schéma d'un exemple de système de commande des paliers magnétiques d'une suspension magnétique active applicable à la présente invention, et

– la figure 12 représente pour différents modes de commande de la suspension magnétique selon l'invention, les courbes donnant le coefficient d'amortissement de la suspension en fonction de la vitesse de rotation de l'arbre tournant, d'une part pour des paliers magnétiques sans effet hydrodynamique et d'autre part pour des paliers magnétiques radiaux mixtes apportant un amortissement hydrodynamique.

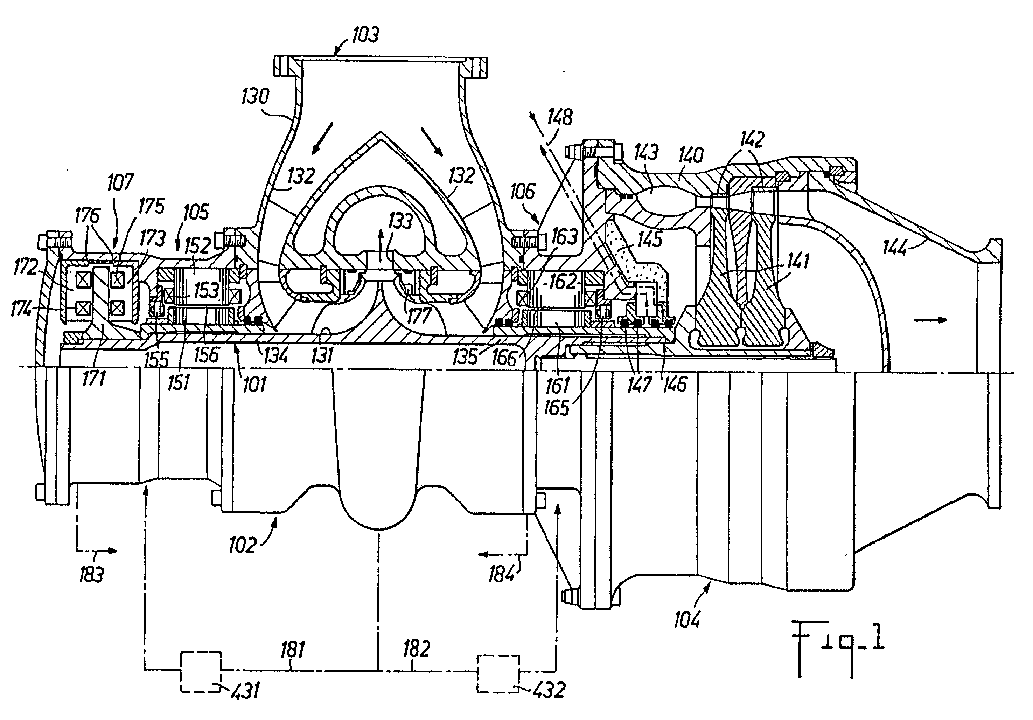

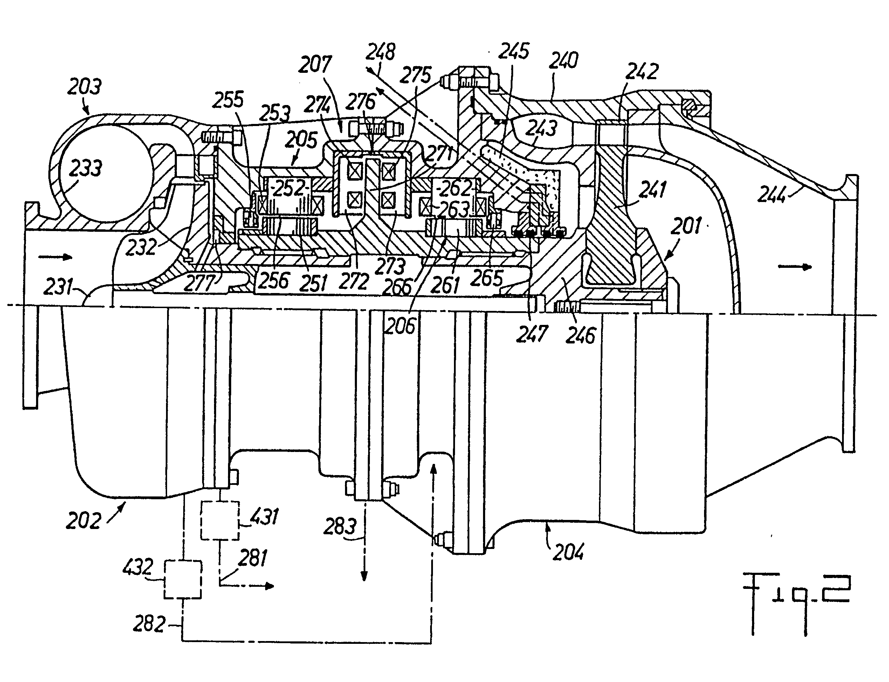

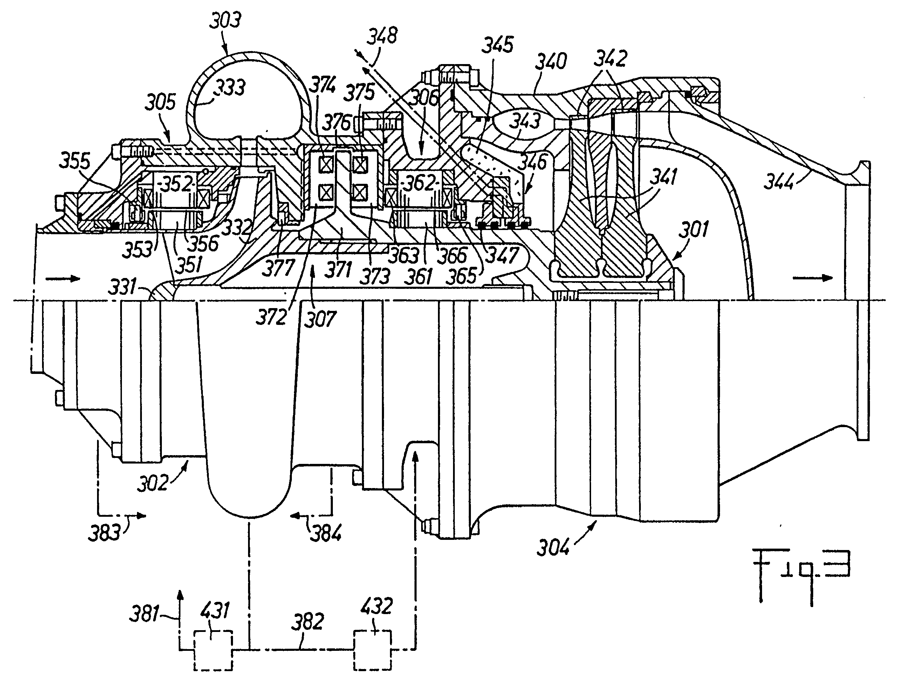

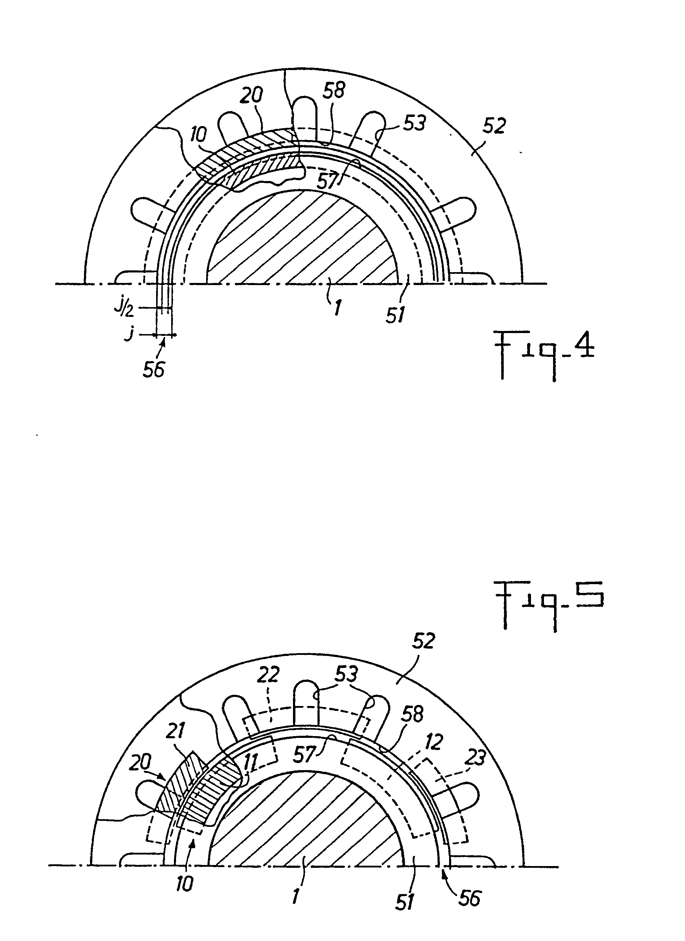

On décrira d'abord en référence aux figures 1 à 3, trois exemples de turbo-pompes, utilisables en particulier dans le domaine spatial avec un moteur fusée, lesquelles turbo-pompes sont équipées d'une suspension magnétique active et sont prévues pour une mise en oeuvre des différentes caractéristiques particulières de la présente invention qui seront décrites de façon plus détaillée dans la suite de la description en référence aux figures 4 à 11.

Les figures 1 à 3 correspondent à trois variantes de réalisation de turbo-pompe qui comportent chacune une série d'éléments constitutifs dont la géométrie peut être différente d'une variante de réalisation à l'autre, mais dont la fonction est la même. Pour cela, on a désigné les éléments correspondants semblables des figures 1 à 3, par un numéro de référence dont les deux derniers chiffres sont les mêmes et dont le premier chiffre est un 1, un 2 ou un 3 selon que l'élément appartient à la variante de réalisation de la figure 1, de la figure 2 ou de la figure 3.

Sur la figure 1 on voit une turbo-pompe à double entrée qui comprend un carter 102 à l'intérieur duquel est monté un arbre tournant 101. Le carter 102 et l'arbre tournant 101 sont munis d'un ensemble d'organes qui définissent une partie formant pompe 103, sur la gauche de la figure 1 et une partie formant turbine 104, sur la droite de la figure 1.

La pompe 103 comprend une tubulure 130 d'entrée de fluide de pompage définissant deux circuits d'entrée 132. Le fluide, pompé par des roues 131 solidaires de l'arbre 101 est renvoyé sous haute pression par l'action de la force centrifuge, dans le conduit de sortie 133. Le fluide utilisé peut être par exemple un carburant tel que de l'hydrogène liquide, des hydrocarbures, de l'hydrazine et ses dérivés, un alcool, ou un comburant tel que de l'oxygène liquide ou des dérivés azotés.

Des dispositifs d'étanchéité à bagues flottantes 134, 135 sont disposés de part et d'autre de la pompe 103 entre l'arbre tournant 101 et les organes de la pompe solidaires du carter 102.

La turbine 104 comprend elle-même à l'intérieur d'un corps 140 solidaire du carter 102 une chambre 143 d'alimentation en gaz sous pression et des roues de turbine 141 munies de pales coopérant avec des pistes abradables 142 formées sur la paroi interne du corps 140. Une ouverture 144 permet l'échappement des gaz de combustion hors de la turbo-pompe.

Les roues de turbine 141 sont de préférence réalisées en matériaux composites, par exemple à base de fibres carbone-carbure de silicium ou de fibres de carbure de silicium-carbure de silicium. De même la ou les roues de pompe 131 sont avantageusement réalisées en des matériaux composites par exemple à base de fibres de carbone-résine. L'utilisation de matériaux composites permet de réduire la masse et le moment d'inertie de l'ensemble tournant 101, ce qui facilite le contrôle dynamique de cet ensemble et minimise l'énergie de commande des paliers magnétiques de support.

Un matériau 145 de protection thermique est monté sur le carter 102 entre la turbine 104, dont les roues 141 sont montées en porte-à-faux sur l'arbre 101, et l'un des paliers radiaux 106 de support de l'arbre 101, afin de limiter les transferts de chaleur vers les organes de suspension de l'arbre. Un dispositif 146 de protection assure en outre une étanchéité dynamique à l'aide de bagues flottantes 147 et d'un flux 148 de balayage à l'aide d'un gaz rare tel que de l'hélium.

Comme on peut le voir sur la figure 1, l'arbre tournant 101 est monté à l'intérieur du carter 102 à l'aide d'une suspension magnétique comprenant une butée magnétique axiale 107 disposée à l'extrémité de l'arbre opposée à la turbine 104, et au moins deux paliers magnétiques radiaux 105, 106 disposés de part et d'autre de la pompe 103.

La butée magnétique 107 comprend une armature ferromagnétique 171 en forme de disque solidaire de l'arbre 101 et perpendiculaire à ce dernier, et des armatures ferromagnétiques 172, 173 fixes solidaires du carter 102 et disposées de part et d'autre de l'armature 171 en ménageant avec celle-ci des entrefers axiaux 176. Des enroulements d'électro-aimant 174, 175 sont disposés de façon classique dans des encoches des armatures 172, 173 et sont reliées à un circuit de commande 400 (figure 11) recevant des signaux d'au moins un détecteur axial 177 de la position axiale du rotor 101 pour constituer une butée axiale active. Comme on peut le voir sur la figure 1, le détecteur 177, qui constitue à la fois un détecteur axial et radial, se trouve situé au niveau de la pompe 103, mais pourrait aussi être disposé en un autre emplacement le long de l'arbre 101.

Les paliers magnétiques radiaux 105, 106 comprennent une armature ferromagnétique feuilletée rotorique 151, 161 en forme d'anneau fixée sur l'arbre tournant 101, une armature ferromagnétique feuilletée statorique 152, 162 solidaire du carter 102 et des enroulements d'électro-aimants 153, 163 commandés par des circuits de commande 400 (figure 11) recevant des signaux d'au moins deux détecteurs radiaux 155, 165 de la position radiale de l'arbre 101.

Les détecteurs 155, 165 peuvent être placés immédiatement à côté des paliers radiaux 105, 106 comme représenté sur la figure 1. Toutefois, des détecteurs radiaux additionnels peuvent être placés en d'autres emplacements le long de l'arbre 101, par exemple au niveau des joints de pompe 134, 135 ou de turbine 146, ou encore en d'autres points particuliers utiles en fonction des caractéristiques dynamiques de l'arbre. Dans le cas de la figure 1, le détecteur 177 constitue un détecteur radial supplémentaire placé au niveau de la pompe 103. Ceci permet de mettre en oeuvre un système de commande 400 de la suspension magnétique active qui prend en compte les signaux de tous les détecteurs et peut contrôler l'ensemble des jeux axiaux et radiaux pour atteindre les performances souhaitées tant du point de vue de la stabilité de l'arbre 101 que du rendement des organes tournants.

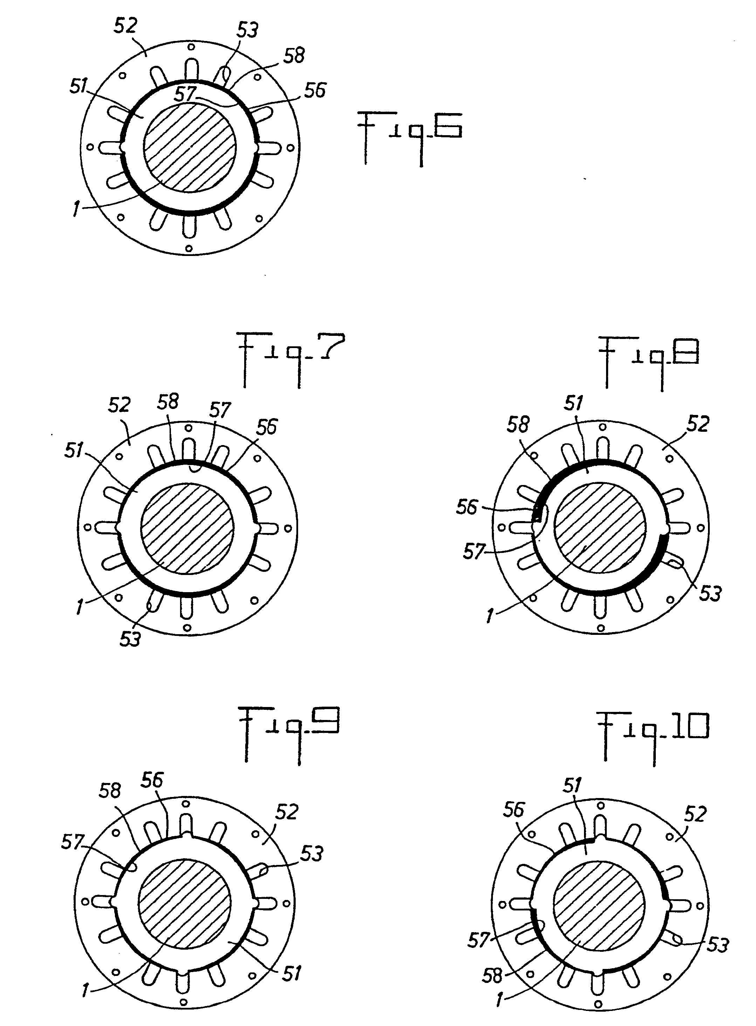

Les paliers magnétiques radiaux 105, 106 sont équipés de bagues en matériau composite servant de dispositif atterrisseur, conformément à la description qui sera faite plus loin en référence aux figures 4 et 5. Toutefois, pour plus de clarté, ces bagues n'ont pas été représentées sur le schéma de la figure 1. On notera cependant que la mise en oeuvre de dispositifs amortisseurs de secours incorporés dans les paliers radiaux permet d'éviter l'utilisation de roulements de secours tout en garantissant que les surfaces des armatures rotorique et statorique 151, 152 ; 161, 162 définissant les entrefers 156 ; 166 des paliers radiaux 105, 106 gardent leur intégrité quelles que soient les conditions de fonctionnement.

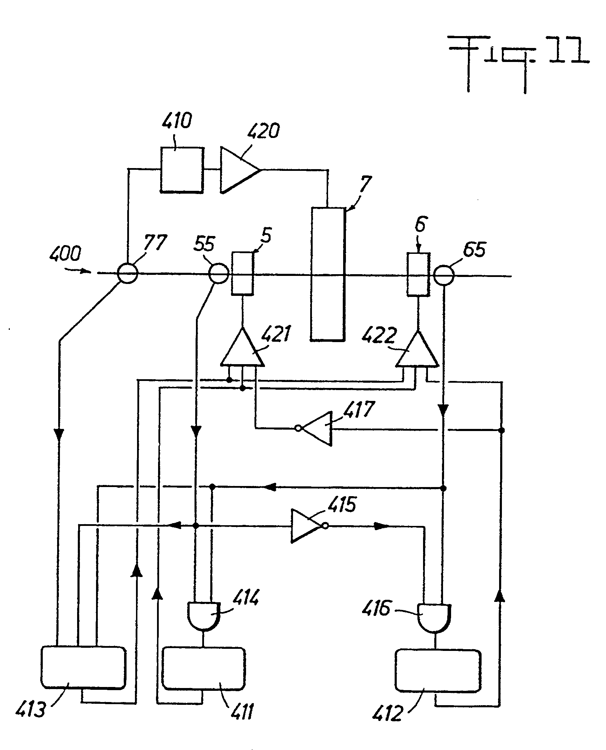

Comme cela sera également décrit plus en détail en référence aux figures 6 à 10, les paliers radiaux 105, 106 sont de type mixte et comportent des canaux formés dans les armatures statoriques 152, 162 pour introduire dans les entrefers 156, 166 des paliers radiaux une partie du fluide sous pression véhiculé par la pompe 103, afin de créer des effets hydrodynamiques dans les entrefers 156, 166 et permettre à la fois d'obtenir un amortissement à large bande et une redondance de suspension par la combinaison des effets magnétique et hydrodynamique.

On a représenté de façon symbolique sur la figure 1 les lignes 181, 182 d'alimentation des entrefers 156, 166 en fluide haute pression et les lignes 183, 184 de retour du fluide à basse pression. Des détendeurs 431, 432 peuvent être interposés sur les lignes 181, 182 pour régler la pression d'alimentation des entrefers 156, 166 en fluide. Les détendeurs 431, 432 peuvent être eux-mêmes commandés par un système centralisé de commande associé aux circuits 400 de commande de la suspension magnétique.

La turbo-pompe de la figure 2 ne diffère de celle de la figure 1 que par l'agencement de certains éléments. Ainsi, la pompe 203 présente une simple entrée 232 et non une double entrée, la turbine 204 est à un simple étage et non à double étage, et la butée axiale 207 est située entre les paliers radiaux 205 et 206 et non à l'extrémité de l'arbre tournant 201. Les divers éléments représentés sur la figure 2 présentent la même fonction que les éléments décrits en référence à la figure 1 qui comportent dans leur numéro de référence les mêmes deux derniers chiffres. Aussi, ces divers éléments ne seront pas décrits à nouveau.

La turbo-pompe de la figure 3 est une variante de réalisation de la turbo-pompe de la figure 2. Selon la variante de la figure 3, le palier magnétique radial 305 est disposé sur le flasque de la pompe 303, c'est-à-dire du côté de la pompe 303 opposé à la butée axiale 307 et à la turbine 304, et non entre la pompe 203 et la butée axiale 207 comme selon la variante de réalisation de la figure 2. Le fonctionnement de la suspension magnétique de la turbo-pompe de la figure 3 reste cependant analogue à celui de la suspension des turbo-pompes des figures 1 et 2 et pour la description des divers éléments de la figure 3 on se reportera à la description faite en référence à la figure 1 des éléments dont les numéros de référence portent les deux mêmes derniers chiffres.

On décrira maintenant en référence à la figure 4 un palier magnétique radial muni d'un dispositif atterrisseur de secours incorporé dans le palier.

Dans le palier de la figure 4, l'armature rotorique 51 est constituée d'un ensemble de tôles ferromagnétiques frettées sur l'arbre tournant 1, tandis que l'armature statorique 52 comporte un empilement de tôles ferromagnétiques munies d'encoches 53 pour le logement d'enroulements, non représentés sur la figure 4 pour la clarté du schéma. Un entrefer 56 dont la longueur dans le sens radial est égale à une valeur moyenne j, par exemple de l'ordre de quelques dixièmes de millimètre, est ménagé entre les surfaces 57 et 58 des armatures rotorique et statorique 51, 52 situées en regard l'une de l'autre.

Des bagues concentriques 10, 20 sont ancrées dans les armatures rotorique et statorique 51, 52 respectivement de manière à ménager entre elles un espace libre dont la longueur dans le sens radial est de l'ordre de la moitié j/2 de la longueur moyenne j de l'entrefer 56 du palier magnétique.

Les bagues 10, 20 sont en une résine fluorée thermoplastique telle que du PTFE, ou en un matériau composite, par exemple du type carbone-carbone, ou carbone-carbure de silicium. De la sorte, les bagues 10, 20 ne perturbent pas le champ magnétique dans l'entrefer 56, mais, à l'arrêt, ou en cas d'interruption de l'alimentation des électro-aimants du palier radial, assurent un atterrisage en douceur par mise en contact des bagues 10, 20 entre elles, ce qui préserve l'intégrité des surfaces métalliques 57, 58 des armatures 51, 52 du palier magnétique.

La figure 5 correspond à un second mode de réalisation d'un dispositif atterrisseur, dans lequel les bagues 10, 20 ne sont pas complètes, comme dans le cas de la figure 4, mais sont constituées chacune par un ensemble de segments de bague 11, 12 ; 21, 22, 23 respectivement espacés les uns des autres.

De préférence, les segments de bagues 11, 12 ou 21, 22, 23 de l'une des bagues 10 ou 20 s'étendent dans le sens circonférentiel selon un arc dont la longueur est supérieure à environ le double de la longueur des espaces libres ménagés entre les segments de bague 21, 22, 23 ou 11, 12 de l'autre bague 20 ou 10.

Les segments de bague assurent la même fonction que des bagues complètes mais permettent de ménager entre le rotor 51 muni de la bague 10 et le stator 52 muni de la bague 20 des espaces libres plus importants permettant la circulation d'un fluide créant des effets hydrodynamiques dans le cas où le palier magnétique est utilisé comme palier mixte.

Comme cela a été indiqué plus haut, il est avantageux que les paliers magnétiques radiaux tels que 105, 106, 205, 206, 305, 306 des figures 1 à 3, soient du type mixte. Dans ce cas, des canaux sont formés dans les armatures statoriques pour amener dans les entrefers des paliers radiaux du fluide pressurisé par la pompe 103, 203, 303. De plus, les surfaces (référencées 57 et 58 sur les figures 4 à 10) des armatures rotorique et satorique (référencées 51 et 52 sur les figures 4 à 10) de chaque palier radial présentent des géométries très différentes l'une de l'autre afin de créer des effets hydrodynamiques significatifs au niveau de chaque palier radial.

On a représenté sur les figures 6 à 10 à titre d'exemples, plusieurs géométries possibles pour les surfaces 57, 58 et donc plusieurs formes d'entrefer 56 associées à des excentrements contrôlés du rotor. Pour la clarté des schémas, on n'a pas représenté sur les figures 6 à 10 les segments des bagues 10, 20 du dispositif amortisseur de la figure 5.

La figure 6 montre une géométrie d'entrefer 56 circulaire à deux poches.

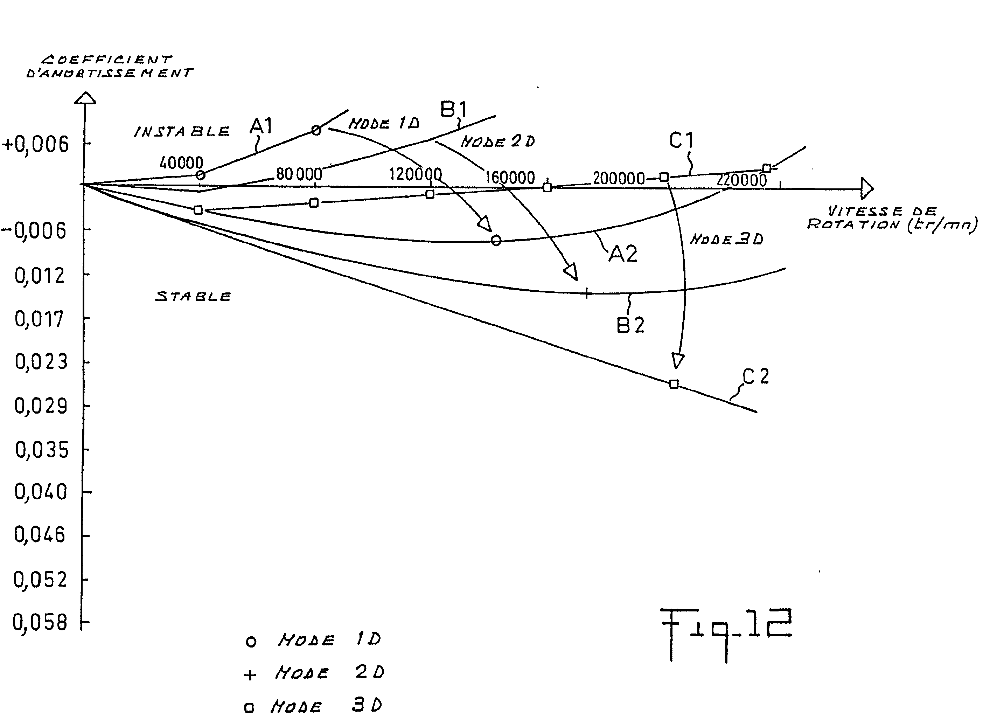

Les figures 7 et 8 montrent des géométries d'entrefer 56 bilobes symétrique et dissymétrique respectivement.

Les figures 9 et 10 montrent des géométries d'entrefer quadrilobes symétrique et dissymétrique respectivement.

Dans le cas de paliers radiaux de type mixte, les enroulements d'électro-aimant de stator et les armatures ferromagnétiques rotoriques et satoriques sont recouverts d'une matière isolante étanche de protection contre les attaques chimiques des fluides véhiculés par la pompe et introduits dans les entrefers.

L'utilisation de paliers mixtes, actifs dès que la surpression de la pompe est satisfaisante, permet d'obtenir un amortissement à large bande tout en contribuant à la suspension de l'arbre tournant par l'addition des effets magnétiques et hydrodynamiques.

On a représenté sur la figure 12 des courbes montrant l'influence de l'amortissement hydrodynamique sur la stabilité de trois modes directs d'asservissement des paliers.

Les courbes A1, B1, C1 représentent le coefficient d'amortissement de la suspension magnétique active en fonction de la vitesse de rotation de l'arbre tournant respectivement pour des amortissements selon des modes directs 1, 2, 3, tels qu'appliqués par des circuits de traitement 411, 412, 413 respectivement dans les circuits de commande 400 (figure 11), pour des paliers magnétiques radiaux classiques.

Les courbes A2, B2, C2 représentent le coefficient d'amortissement de la suspension en fonction de la vitesse de rotation de l'arbre tournant dans les mêmes conditions que pour les courbes A1, B1, C1 mais avec l'utilisation de paliers radiaux de type mixte. On constate que la stabilité a été fortement accrue.

Le système de commande de la suspension magnétique active, réglable et reprogrammable, peut être réalisé en logique câblée interchangeable, mais est avantageusement de type numérique. Dans ce cas, le circuit de commande comprend une chaîne de traitement constituée d'un convertisseur analogique-numérique recevant les signaux des différents détecteurs 55, 65, 77 (figure 11), d'un calculateur programmé pour élaborer en temps réel une réponse adaptée à des conditions spécifiques de fonctionnement de la turbomachine, ou à des perturbations extérieures, et d'un convertisseur numérique-analogique pilotant les amplificateurs de puissance 420, 421, 422 de commande des paliers magnétiques actifs.

Sur la figure 11 on a représenté schématiquement un circuit 400 de commande d'une butée magnétique axiale 7 et de deux paliers magnétiques radiaux 5, 6 d'une suspension de turbopompe à partir de deux détecteurs radiaux 55, 65 situés au voisinage des paliers radiaux 5, 6 respectivement et d'un détecteur 77 situé au niveau de la pompe et donnant des informations à la fois sur la position axiale et la position radiale de l'arbre tournant.

Les signaux issus du détecteur 77 sont appliqués d'une part à un module de traitement 410 servant à la commande de l'amplificateur 420 d'alimentation des enroulements de la butée axiale 7, et à un module de traitement 413, d'asservissement des paliers radiaux 5, 6 selon un mode 3 direct. Le module de traitement 413 reçoit en outre les signaux délivrés par les détecteurs radiaux 55, 65 et sert à commander selon le mode 3 les amplificateurs de puissance 421, 422 associés aux paliers radiaux 5, 6.

Un module de traitement 411 reçoit par un circuit additionneur 414 les signaux délivrés par les détecteurs radiaux 55, 65 et sert à commander selon le mode 1 direct les amplificateurs de puissance 421, 422.

Un module de traitement 412 reçoit par un additionneur 416 d'une part les signaux délivrés par le détecteur radial 65 disposé à côté du palier radial 6, et d'autre part, après passage par un inverseur 415, les signaux délivrés par le détecteur radial 55 disposé à côté du palier radial 5. Les signaux issus du module de traitement 412 servent à commander selon le mode 2 directement l'amplificateur de puissance 422 associé au palier radial 6 et, par l'intermédiaire d'un inverseur 417, l'amplificateur de puissance 421 associé au palier radial 5.

Naturellement, les circuits de commande 400 représentés schématiquement sur la figure 11 ne présentent qu'un exemple de modes d'asservissement possibles pour l'ensemble de la suspension magnétique active et diverses variantes sont possibles.

## Revendications

1. Palier magnétique actif radial avec atterrisseur de secours comprenant une armature ferromagnétique feuilletée statorique (52) solidaire d'un bâti, des enroulements d'électroaimant montés dans des encoches (53) de l'armature statorique, et une armature ferromagnétique feuilletée rotorique (51) solidaire d'un arbre tournant (1) et définissant un entrefer (56) avec l'armature statorique (52) qui lui fait face, caractérisé en ce qu'il comprend en outre un dispositif atterrisseur de secours constitué par au moins une première bague (10) ancrée dans l'armature rotorique (51) et une seconde bague (20) ancrée dans l'armature statorique (52), en ce que les première et seconde bagues (10, 20) sont concentriques et ménagent entre elles un espace libre dont la longueur (j/2) dans le sens radial est de l'ordre de la moitié de la longueur (j) de l'entrefer moyen (56) du palier magnétique, et en ce que les première et seconde bagues (10, 20) sont réalisées en un matériau composite ou en une résine fluorée thermoplastique.

2. Palier magnétique selon la revendication 1, caractérisé en ce que chacune des première et seconde bagues (10, 20) d'un dispositif atterrisseur de secours est constituée par un ensemble de segments de bague (11, 12 ; 21, 22, 23) espacés les uns des autres.

3. Turbomachine à suspension magnétique active comprenant un carter fixe (102 ; 202 ; 302), un arbre tournant (101 ; 201 ; 301) solidaire d'au moins une roue de turbine (141 ; 207 ; 307), un palier magnétique actif axial (107, 207, 307) pour le positionnement axial de l'arbre tournant (101 ; 201 ; 301) à l'intérieur du carter (102 ; 202 ; 302), un détecteur axial (177 ; 277 ; 377) de la position axiale de l'arbre tournant (101 ; 201 ; 301), deux paliers magnétiques actifs radiaux (105 ; 106 ; 205 ; 206 305 ; 306) pour le positionnement radial de l'arbre tournant (101 ; 201 ; 301) à l'intérieur du carter (102 ; 202 ; 302), au moins deux détecteurs radiaux (155, 165 ; 255, 265 ; 355, 365) de la position radiale de l'arbre tournant (101 ; 201 ; 301) et un système de commande (400) recevant les signaux délivrés par l'ensemble des détecteurs (155, 165, 177, 255, 265, 277 ; 305, 365, 377) pour contrôler par l'intermédiaire des paliers magnétiques actifs radiaux et axial les jeux radiaux et axiaux entre les organes de machine solidaire du carter (102 ; 202 ; 302) et les organes de machine solidaires de l'arbre tournant (101 ; 201 ; 301), caractérisée en ce qu'elle comprend en outre au moins deux dispositifs atterrisseurs de secours (10, 20) constitués chacun par une première bague (10) solidaire de l'arbre tournant (101 ; 201 ; 301) et une seconde bague (20) solidaire du carter (102 ; 202 ; 302) et concentrique à la première bague (10) en ménageant avec la première bague (10) un espace libre dont la longueur (j/2) dans le sens radial est de l'ordre de la moitié de la longueur (j) de l'entrefer moyen (56) des paliers magnétiques radiaux (105, 106 ; 205, 206 ; 305, 306) et en ce que les première et seconde bagues (10, 20) sont réalisées en un matériau composite ou en une résine fluorée thermoplastique.

4. Turbomachine selon la revendication 3, caractérisée en ce que la première bague (10) et la seconde bague (20) d'un dispositif atterrisseur de secours sont ancrées respectivement dans l'armature ferromagnétique feuilletée rotorique (51) et dans l'armature ferromagnétique feuilletée statorique (52) d'un palier magnétique actif radial (105 ou 106 ; 205 ou 206 ; 305 ou 306).

5. Turbomachine selon la revendication 3 ou la revendication 4, caractérisée en ce que les première et seconde bagues (10, 20) d'un dispositif atterrisseur de secours sont réalisées en un matériau composite du type carbone-carbone ou carbone-carbure de silicium ou carbure de silicium-carbure de silicium.

6. Turbomachine selon l'une quelconque des revendications 3 à 5, caractérisée en ce que chacune des première et seconde bagues (10, 20) d'un dispositif atterrisseur de secours présente la forme d'un anneau ininterrompu dans le sens circonférentiel.

7. Turbomachine selon l'une quelconque des revendications 3 à 5, caractérisée en ce que chacune des première et seconde bagues (10, 20) d'un dispositif atterrisseur de secours est constituée par un ensemble de segments de bague (11, 12 ; 21, 22, 23) espacés les uns des autres.

8. Turbomachine selon la revendication 7, caractérisée en ce que les segments de bague (11, 12 ou 21, 22, 23) de l'une des première et seconde bagues (10 ou 20) s'étendent dans le sens circonférentiel selon un arc dont la longueur est supérieure à environ le double de la longueur des espaces libres ménagés entre les segments de bague (21, 22, 23 ou 11, 12) de l'autre bague (20 ou 10).

9. Turbomachine selon la revendication 7 ou la revendication 8, du type turbopompe, caractérisée en ce qu'elle comprend en outre des canaux aménagés dans les armatures ferromagnétiques statoriques (152, 162 ; 252, 262 ; 352, 362) des paliers magnétiques actifs radiaux (105, 106 ; 205, 206 ; 305, 306) pour amener dans les entrefers de ces paliers du fluide pressurisé par la pompe, et en ce que les entrefers (56 ; 156, 166 ; 256, 266 ; 356, 366) des paliers magnétiques radiaux sont délimités par des surfaces (57, 58) de géométries légèrement différentes l'une de l'autre afin de créer des effets hydrodynamiques significatifs au niveau de chacun des paliers magnétiques actifs radiaux.

10. Turbomachine selon la revendication 9, caractérisée en ce que les bobinages (153, 163 ; 253, 263 ; 353, 363) et les armatures ferromagnétiques rotoriques et statoriques (51, 52) des paliers magnétiques radiaux sont recouverts d'une matière isolante étanche de protection contre les attaques chimiques des fluides véhiculés par la pompe et introduits dans les entrefers (56).

11. Turbomachine selon la revendication 9 ou la revendication 10, caractérisée en ce qu'elle comprend en outre des détendeurs (431, 432) pour fournir la pression d'alimentation en fluide dans les entrefers (56) des paliers magnétiques radiaux, à partir du fluide pressurisé par la pompe, et en ce que les détendeurs (431, 432) sont commandés par un circuit de commande associé au circuit de commande (400) de la suspension magnétique active.

12. Turbomachine selon l'une quelconque des revendications 3 à 11, caractérisée en ce que le circuit de commande (400) de la suspension magnétique active comprend une chaîne de traitement constituée d'un convertisseur analogique-numérique recevant des signaux des différents détecteurs (155, 165, 177 ; 255, 265, 277 ; 355, 365, 377), d'un calculateur programmé pour élaborer en temps réel une réponse adaptée à des conditions spécifiques de fonctionnement de la turbomachine, ou à des perturbations extérieures, et d'un convertisseur numérique-analogique pilotant les amplificateurs de puissance (420, 421, 422) de commande des paliers magnétiques actifs.

13. Turbomachine selon l'une quelconque des revendications 3 a 12, du type turbopompe, caractérisée en ce qu'elle comprend des détecteurs radiaux ou axiaux (177 ; 277 ; 377) disposés aux joints de turbine ou de pompe.

14. Turbomachine selon l'une quelconque des revendications 3 à 13, caractérisée en ce que les roues de turbine sont réalisées en matériau composite, tel qu'un matériau a fibres de carbone-carbure de silicium ou fibres de carbure de silicium-carbure de silicium.

15. Turbomachine selon l'une quelconque des revendications 3 à 14, du type turbopompe, caractérisée en ce que les roues de pompe sont réalisées en matériau composite tel qu'un matériau à fibres de carbone-résine.

16. Turbomachine selon l'une quelconque des revendications 3 à 15, du type turbopompe, caractérisée en ce que l'un des paliers magnétiques radiaux (305) est monté sur le flasque de la pompe.

**Patentansprüche**

1. Aktives radiales Magnetlager mit Stützlager mit einer ferromagnetischen geschichteten Statorarmatur (52), die mit einem Gestell verbunden ist, elektromagnetischen Wicklungen, die in Kerben (53) der Statorarmatur eingebracht sind, und einer geschichteten ferromagnetischen Rotorarmatur (51), die mit einer Drehwelle (1) verbunden ist und einen Luftspalt (56) mit der Statorarmatur (52) definiert, die ihr gegenüberliegt, **dadurch gekennzeichnet**, daß es weiterhin eine Stützlagervorrichtung aufweist, gebildet aus wenigstens einem ersten Ring (10), der in der Rotorarmatur (51) verankert ist und einem zweiten Ring (20), der in der Statorarmatur (52) verankert ist, daß der erste und zweite Ring (10, 20) konzentrisch sind und zwischen sie einen Freiraum ausbilden, dessen Länge (j/2) in Radialrichtung von der Größenordnung ist von der Hälfte der Länge (j) des mittleren Luftspalts (56) des Magnetlagers, und daß der erste und zweite Ring (10, 20) aus einem Verbundmaterial oder aus einem fluorierten thermoplastichen Harz gebildet sind.

2. Magnetlager nach Anspruch 1, **dadurch gekennzeichnet**, daß jeder der ersten und zweiten Ringe (10, 20) einer Stützlagervorrichtung gebildet ist aus einer Segmentgesamtheit von Ringen (11, 12; 21, 22, 23), die untereinander beabstandet sind.

3. Turbomaschine mit aktiver magnetischer Lagerung mit einem festen Gehäuse (102; 202; 302), einer Drehwelle (101; 201; 301), die mit wenigstens einem Turbinenrad (141; 207; 307) verbunden ist, einem axialen aktiven Magnetlager (107, 207, 307) für die axiale Positionierung der Drehwelle (101; 201; 301) im Inneren des Gehäuses (102; 202; 302), einem Axialdetektor (177; 277; 377) der axialen Stellung der Drehwelle (101; 201; 301), zwei radialen aktiven Magnetlagern (105; 106; 205; 206; 305; 306) für die radiale Positionierung der Drehwelle (101; 201; 301) im Inneren des Gehäuses (102; 202; 302), wenigstens zwei Radialdetektoren (155, 165; 255, 265; 355, 365) der Radialstellung der Drehwelle (101; 201; 301) und einem Steuersystem (400), das die von der Gesamtheit der Detektoren (155, 165, 177, 255, 265, 277; 305, 365, 377) gelieferten Signale empfängt, um mittels aktiver radialer und axialer Magnetlager die radialen und axialen Spiele zwischen den Maschinenorganen, die mit dem Gehäuse (102; 202; 302) verbunden sind und den Maschinenorganen, die mit der Drehwelle (101; 201; 301) verbunden sind, zu steuern, **dadurch gekennzeichnet**, daß sie weiterhin wenigstens zwei Stützlagervorrichtungen (10, 20) aufweist, die jeweils durch einen ersten Ring (10), der mit der Drehwelle (101; 201; 301) verbunden ist und einem zweiten Ring (20) gebildet ist, der mit dem Gehäuse (102; 202; 302) verbunden ist und konzentrisch zum ersten Ring (10) verläuft, unter Ausbildung mit dem ersten Ring (10) eines Freiraums, dessen Länge (j/2) in Radialrichtung in der Größenordnung ist von der Hälfte der Länge (j) des mittleren Spaltes (56) der Radialmagnetlager (105, 106; 205, 206; 305, 306), und daß der erste und der zweite Ring (10, 20) aus einem Verbundmaterial oder aus einem fluorierten thermoplastischen Harz gebildet sind.

4. Turbomaschine nach Anspruch 3, **dadurch gekennzeichnet**, daß der erste Ring (10) und der zweite Ring (20) einer Stützlagervorrichtung jeweils in der geschichteten ferromagnetischen Rotorarmatur (51) bzw. in der geschichteten ferromagnetischen Statorarmatur (52) eines aktiven radialen Magnetlagers (105 oder 106; 205 oder 206; 305 oder 306) verankert sind.

5. Turbomaschine nach Anspruch 3 oder 4, **dadurch gekennzeichnet**, daß der erste und der zweite Ring (10, 20) einer Stützlagervorrichtung aus einem Verbundmaterial vom Typ Kohlenstoff-Kohlenstoff oder Kohlenstoff-Siliziumkarbid oder Siliziumkarbid-Siliziumkarbid gebildet ist.

6. Turbomaschine nach einem der Ansprüche 3 bis 5, **dadurch gekennzeichnet**, daß jeder der ersten und zweiten Ringe (10, 20) einer Stützlagervorrichtung die Form eines ununterbrochenen Rings in Umfangsrichtung aufweist.

7. Turbomaschine nach einem der Ansprüche 3 bis 5, **dadurch gekennzeichnet**, daß ein jeder der ersten und zweiten Ringe (10, 20) einer Stützlagervorrichtung durch eine Anordnung von Ringsegmenten (11, 12; 21, 22, 23) gebildet wird, die untereinander beabstandet sind.

8. Turbomaschine nach Anspruch 7, **dadurch gekennzeichnet**, daß die Ringsegmente (11, 12 oder 21, 22, 23) des einen der ersten und zweiten Ringe (10 oder 20) sich in Umfangsrichtung gemäß einem Bogen erstrecken, dessen Länge größer ist als ungefähr das Doppelte der Länge der zwischen den Ringsegmenten (21, 22, 23 oder 11, 12) des anderen Rings (20 oder 10) ausgebildeten Freiräume.

9. Turbomaschine nach Anspruch 7 oder 8 vom Typ einer Turbopumpe, **dadurch gekennzeichnet**, daß sie weiterhin Kanäle aufweist, die in den ferromagnetischen Statorarmaturen (152, 162; 252, 262; 352, 362) von radialen aktiven Magnetlagern (105, 106; 205, 206; 305, 306) ausgebildet sind, um in die Luftspalten dieser Lager durch die Pumpe unter Druck gesetztes Fluid einzubringen und daß die Luftspalten (56 ; 156, 166 ; 256, 266 ; 356, 366) der radialen magnetischen Lager begrenzt werden durch Flächen (57, 58) von leicht unterschiedlicher Geometrie, um signifikante hydrodynamische Effekte im Bereich eines jeden der aktiven radialen Magnetlager hervorzurufen.

10. Turbomaschine nach Anspruch 9, **dadurch gekennzeichnet**, daß die Wicklungen (153, 163 ; 253, 263 ; 353, 363) und die ferromagnetischen Rotor- und Statorarmaturen (51, 52) der radialen Magnetlager von einem dichten isolierenden Schutzmaterial gegen die chemischen Angriffe der von der Pumpe bewegten und in die Luftspalten (56) eingeführten Fluide überdeckt sind.

11. Turbomaschine nach Anspruch 9 oder 10, **dadurch gekennzeichnet**, daß sie weiterhin Reduzierventile (431, 432) aufweist, um den Luftspeisedruck in den Luftspalten (56) der radialen Magnetlager, ausgehend vom durch die Pumpe unter Druck gesetzten Fluid zu liefern, und daß die Reduzierventile (431, 432) von einem Steuerschaltkreis gesteuert werden, der dem Steuerschaltkreis (400) der aktiven magnetischen Lagerung zugeordnet ist.

12. Turbomaschine nach einem der Ansprüche 3 bis 11, **dadurch gekennzeichnet**, daß der Steuerschaltkreis (400) des aktiven magnetischen Lagers eine Verarbeitungskette aufweist, gebildet aus einem Analog-Digitalwandler, der Signale von den unterschiedlichen Detektoren (155, 165, 177 ; 255, 265, 277 ; 355, 365, 377) empfängt, einem programmierten Rechner, für die Ausarbeitung in Realzeit einer geeigneten Antwort auf die spezifizierten Betriebsbedingungen der Turbomaschine, oder für äußere Einwirkungen geeignet ist und einem Digital-Analogwandler, der die Leistungsverstärker (420, 421, 422) der Steuerung der aktiven Magnetlager steuert.

13. Turbomaschine nach einem der Ansprüche 3 bis 12 vom Typ Turbopumpe, **dadurch gekennzeichnet**, daß sie radiale oder axiale Detektoren (177 ; 277 ; 377) aufweist, die an den Verbindungsstellen der Turbine oder der Pumpe angeordnet sind.

14. Turbomaschine nach einem der Ansprüche 3 bis 13, **dadurch gekennzeichnet**, daß die Turbinenräder aus einem Verbundmaterial, wie beispielsweise einem Material aus Karbon-Siliziumkarbid-Fasern oder aus Siliziumkarbid-Siliziumkarbid-Fasern gebildet sind.

15. Turbomaschine nach einem der Ansprüche 3 bis 14 vom Typ Turbopumpe, **dadurch gekennzeichnet**, daß die Pumpenräder aus einem Verbundmaterial, wie einem Material aus Karbon-Harz-Fasern gebildet ist.

16. Turbomaschine nach einem der Ansprüche 3 bis 15 vom Typ Turbopumpe, **dadurch gekennzeichnet**, daß eines der radialen Magnetlager (305) auf dem Flansch der Pumpe angeordnet ist.

## Claims

1. Radial active magnetic bearing with auxiliary bearings comprising a stator laminated ferromagnetic core (52) fast with a frame, electromagnetic windings mounted in notches (53) of the stator core, and a rotor laminated ferromagnetic armature (51) fast with a rotary shaft (1) and defining an air gap (56) with the stator core (52) facing it, characterized in that it further comprises auxiliary bearings constituted by at least a first ring (10) anchored in the rotor armature (51) and a second ring (20) anchored in the stator core (52), in that the first and second rings (10, 20) are concentric and provide between them a free space the length (j/2) of which in radial direction is about half the length (j) of the mean air gap (56) of the magnetic bearing, and in that the first and second rings (10, 20) are produced in a composite material or in a fluorinated thermoplastic resin.

2. Magnetic bearing according to claim 1, characterized in that each of the first and second rings (10, 20) of an auxiliary bearing is constituted by a set of spaced apart ring segments (11, 12 ; 21, 22, 23).

3. Turbomachine with active magnetic suspension comprising a fixed casing (102 ; 202 ; 302), a rotary shaft (101 ; 201 ; 301) fast with at least one turbine wheel (141 ; 207 ; 307), an axial active magnetic bearing (107, 207, 307) for axial positioning of the rotary shaft (101 ; 201 ; 301) inside the casing (102 ; 202 ; 302), axial means (177 ; 277 ; 377) for detecting the axial position of the rotary shaft (101 ; 201 ; 301), two radial active magnetic bearings (105 ; 106 ; 205 ; 206 ; 305 ; 306) for the radial positioning of the rotary shaft (101 ; 201 ; 301) inside the casing (102 ; 202 ; 302), at least two radial sensing means (155, 165 ; 255, 265 ; 355, 365) for detecting the radial position of the rotary shaft (101 ; 201 ; 301), and a control system (400) receiving the signals delivered by all the detectors (155, 165, 177, 255, 265, 277 ; 305, 365, 377) in order to control via said radial and axial active magnetic bearings the axial and radial plays between the components of the machine fast with the casing (102 ; 202 ; 302) and the components of the machine fast with the rotary shaft (101 ; 201 ; 301), characterized in that said turbomachine further comprises at least two auxiliary bearings (10, 20), each one constituted by a first ring (10) fast with the rotary shaft (101 ; 201 ; 301), and by a second ring (20) fast with the casing (102 ; 202 ; 302), and concentric with the first ring (10) while creating with said first ring (10) a free space the length (j/2) of which in radial direction is about half the length (j) of the mean air gap (56) of the radial magnetic bearings (105, 106 ; 205, 206 ; 305, 306) ; and in that said first and second rings (10, 20) are produced in a composite material or in a fluorinated thermoplastic resin.

4. Turbomachine according to claim 3, characterized in that the first ring (10) and the second ring (20) of an auxiliary bearing are anchored, respectively, in the rotor laminated ferromagnetic armature (51) and in the stator laminated ferromagnetic core (52) of a radial active magnetic bearing (105 or 106 ; 205 or 206 ; 305 or 306).

5. Turbomachine according to claim 3 or claim 4, characterized in that said first and second rings (10, 20) of an auxiliary bearing are produced in a carbon-carbon type or carbon-silicon carbide type or in silicon carbide-silicon carbide type composite material.

6. Turbomachine according to any one of claims 3 to 5, characterized in that each one of the first and second rings (10, 20) of an auxiliary bearing has the shape of a circumferentially continuous ring.

7. Turbomachine according to any one of claims 3 to 5, characterized in that each one of the first and second rings (10, 20) of an auxiliary bearing is constituted by a set of spaced apart ring segments (11, 12; 21, 22, 23).

8. Turbomachine according to claim 7, characterized in that the ring segments (11, 12 or 21, 22, 23) of one of the first and second rings (10 or 20) extend circumferentially according to an arc of circle of which the length is more than about twice the length of the free spaces provided between the ring segments (21, 22, 23 or 11, 12) of the other ring (20 or 10).

9. Turbomachine as claimed in claim 7 or claim 8, of the turbopump type, characterized in that said machine further comprises channels formed in the stator ferromagnetic cores (152, 162 ; 252, 262 ; 352, 362) of the radial active magnetic bearings (105, 106; 205, 206 ; 305, 306) so as to bring a fluid pressurized by the pump into the air gaps of said bearings, and in that the said air gaps (56 ; 156, 166 ; 256, 266 ; 356, 366) of the radial magnetic bearings are defined by surfaces (57, 58) of geometrical shape varying slightly from one to the other in order to create significant hydrodynamic effects at the level of each of the radial active magnetic bearings.

10. Turbomachine according to claim 9, characterized in that the windings (153, 163 ; 253, 263 ; 353, 363) and the rotor and stator ferromagnetic armatures (51, 52) of the radial magnetic bearings are coated with a tight insulating material of protection against chemical attacks from the fluids conveyed by the pump and into the air gaps.

11. Turbomachine according to claim 9 or 10, characterized in that said machine further comprises reducing valves (431, 432) which provide the pressure required for feeding the fluid to the air gaps (56) of the radial magnetic bearings, from the fluid pressurized by the pump, and in that the reducing valves (431, 432) are controlled by a control circuit associated to the circuit (400) controlling the active magnetic suspension.

12. Turbomachine according to any one of claims 3 to 11, characterized in that the circuit (400) controlling the active magnetic suspension comprises a processing sequence constituted of an analog-to-digital converter receiving the signals from the different detectors (155, 165, 177 ; 255, 265, 277 ; 355, 365, 377), of a computer programmed for working out in real time a response adapted to specific working conditions of the turbomachine, or to external perturbations, and of a digital-to-analog converter controlling the power amplifiers (420, 421, 422) controlling the active magnetic bearings.

13. Turbomachine according to any one of claims 3 to 12, of the turbopump type, characterized in that said machine comprises radial or axial detectors (177 ; 277 ; 377) mounted at the joints of turbine or pump.

14. Turbomachine according to any one of claims 3 to 13, characterized in that the turbine wheels are produced from composite material such as a material based on carbon-silicon carbide fibers or on silicon carbide-silicon carbide fibers.

15. Turbomachine according to any one of claims 3 to 14, of the turbopump type, characterized in that the pump wheels are made from a composite material such as a material based on carbon-resin fibers.

16. Turbomachine according to any one of claims 3 to 15, of the turbopump type, characterized in that one of the radial magnetic bearings (305) is mounted on the pump bearing plate.

Fig.1

EP 0 287 440 B1

Fig. 2

12

Fig. 3

Fig. 4

Fig. 5

Fig.6

Fig.7

Fig.8

Fig.9

Fig.10

Fig. 11

Fig.12